# NEUE EUROPÄISCHE PATENTSCHRIFT

(11) **EP 3 498 918 B2**
(45) Veröffentlichungstag und Bekanntmachung des Hinweises auf die Entscheidung über den Einspruch: **01.01.2025**
(45) Hinweis auf die Patenterteilung: 10.06.2020
(21) Anmeldenummer: 18211381.1
(22) Anmeldetag: 10.12.2018
(51) Int. Cl.: E01C 23/088, E02F 9/08, E02F 9/16, E02F 9/20, B60K 35/00, B60K 37/06, B60R 7/00, B60R 7/04, B60R 7/06, B60R 11/00, B60R 11/02

(54) **BODENBEARBEITUNGSMASCHINE MIT BEDIENPULT MIT VERBESSERTEM VANDALISMUSSCHUTZ**
SOIL-WORKING MACHINE WITH CONTROL PANEL WITH IMPROVED PROTECTION AGAINST VANDALISM
MACHINE DE TRAITEMENT DU SOL POURVUE DE PANNEAU DE COMMANDE À PROTECTION AMÉLIORÉE CONTRE LE VANDALISME

(30) Priorität: 18.12.2017 DE 102017223126
(43) Veröffentlichungstag der Anmeldung: 19.06.2019
(73) Patentinhaber: Wirtgen GmbH, 53578 Windhagen (DE)
(72) Erfinder: Barimani, Cyrus, 53639 Königswinter (DE); Berning, Christian, 53909 Zülpich (DE); Drumm, Stephan, 53560 Vettelschoß (DE)
(74) Vertreter: Ruttensperger Lachnit Trossin Gomoll

(56) Entgegenhaltungen:
- EP-A1- 0 810 324
- EP-A2- 2 650 437
- JP-A- 2009 299 338
- US-A- 3 992 070
- US-A- 4 979 774
- US-A- 5 165 262
- US-A- 5 190 398
- US-B1- 6 474 431
- CAT: "PM620 Cold Planer Parts Manual", January 2017, article "383-8068 Console GP-Operator", pages: 777 - 805

## Beschreibung

Die vorliegende Erfindung betrifft eine Bodenbearbeitungsmaschine, wie etwa eine Straßenfräse, einen Recycler, einen Stabilisierer oder einen Surface-Miner. Die Bodenbearbeitungsmaschine hat ein Fahrwerk und einen vom Fahrwerk getragenen Maschinenrahmen. Sie weist eine Arbeitsvorrichtung zur Bodenbearbeitung auf. Am Maschinenrahmen ist ein Fahrstand mit einem Bedienpult zur Steuerung wenigstens einer Funktionseinrichtung der Bodenbearbeitungsmaschine vorgesehen. Das Bedienpult weist einen Pultkörper und ein relativ zum Pultkörper bewegliches Bedienpaneel mit wenigstens einem Bedienelement auf, welches einer Funktionseinrichtung zu dessen Steuerung zugeordnet oder zuordenbar ist.

Eine solche Bodenbearbeitungsmaschine in Gestalt einer Straßenfräse, insbesondere einer Straßengroßfräse, der Anmelderin ist im relevanten Markt unter der Produktbezeichnung "W 2200" bekannt. Diese Straßenfräse, wie andere Bodenbearbeitungsmaschinen auch, weist ein Bedienpult mit einem Pultkörper und einem vom Pultkörper getragenen Bedienpaneel auf, welches relativ zum Pultkörper beweglich ist, um es für den Maschinenführer, der es bedient, während der Betriebsphasen der Bodenbearbeitungsmaschine in eine ergonomisch vorteilhafte Position verbringen zu können.

Immer häufiger treten bei Bodenbearbeitungsmaschinen in Phasen eines unbeobachteten Nichtgebrauchs Probleme mit Vandalismus auf. Unbefugte betreten dabei Baustellengelände und machen sich an den dort abgestellten Maschinen zu schaffen. Dabei versuchen manche auch, in den Fahrstand einer Bodenbearbeitungsmaschine zu gelangen. Diese Personen sind in der Regel nicht von technischer Neugier, sondern von Zerstörungswut getrieben, sodass großes Interesse besteht, leicht zerstörbare, empfindliche Baugruppen, wie etwa das oben genannte Bedienpaneel, möglichst vor einem Angriff durch Vandalen zu schützen.

Die EP 0 810 324 A1 offenbart einen Straßenfertiger, dessen Schutzdach des Fahrstandes zum Maschinenrahmen hin verschwenkbar ist, um den bekannten Straßenfertiger in einen Transportzustand zu verbringen, in welchem er geringere Abmessungen aufweist als im betriebsbereiten Zustand.

Die Druckschrift JP 2009-299338 A offenbart ein Unterstützungssystem für den Fahrer eines Straßenfertigers, welches vom Fahrer nicht einsehbare Umgebungsbereiche, also tote Winkel, des Straßenfertiger überwacht.

Die Druckschrift EP 2 650 437 A2 offenbart ein Bedienpult, welches im Fahrerstand in Fahrzeugquerrichtung an einer Führungsschiene translatorisch beweglich ist. In diesem Sinne gleicht die Druckschrift EP 2 650 437 A2 der Druckschrift EP 0 810 324 A1. Während das Bedienpult der Druckschrift EP 2 650 437 A2 relativ zum Fahrstand der Bodenbearbeitungsmaschine nur in Fahrzeugquerrichtung translatorisch beweglich ist, ist das Bedienpult der Druckschrift EP 0 810 324 A1 relativ zum Fahrstand sowohl in Fahrzeugquerrichtung translatorisch als auch um eine in Fahrzeugquerrichtung verlaufende Schwenkachse rotatorisch beweglich.

Die Druckschrift US 5.190.398 A offenbart eine Bodenbearbeitungsmaschine mit einem Fahrstand, bei welchem ein Fahrersitz und ein Bedienpult zu einer gemeinsam und einheitlich bewegbaren Bedieneinheit zusammengefasst sind. Die Bedieneinheit ist um eine Gierachse der Bodenbearbeitungsmaschine schwenkbar am Fahrstand angeordnet.

Die Druckschrift US 5 165 262 A offenbart eine Bodenbearbeitungsmaschine mit einem Bedienpult, an dem ein Deckel derart schwenkbar angeordnet ist, dass er zur Abdeckung von am Bedienpult angeordneten Bedienelementen verschwenkbar und in dieser Abdeckungsstellung sicherbar ist.

Daher ist es Aufgabe der vorliegenden Erfindung, die Vandalismussicherheit der eingangs genannten Bodenbearbeitungsmaschine zu erhöhen.

Diese Aufgabe wird erfindungsgemäß gelöst durch eine Bodenbearbeitungsmaschine mit allen Merkmalen des Anspruchs 1. Bei einer solchen Bodenbearbeitungsmaschine ist unter anderem das Bedienpaneel in eine Verstauungsstellung verlagerbar, in der das wenigstens eine Bedienelement durch einen Abschnitt des Pultkörpers bedeckt ist, wobei das Bedienpaneel aus der Verstauungsstellung in eine Bedienstellung verlagerbar ist, in welcher wenigstens ein Bedienelement von dem Abschnitt unbedeckt und daher für seine Bedienung durch einen Maschinenführer zugänglich ist.

Somit kann die Zugänglichkeit des wenigstens einen Bedienelements des Bedienpaneels, vorzugsweise jedoch des gesamten Bedienpaneels in dessen Verstauungsstellung für Unbefugte erschwert werden.

Der Pultkörper ist dabei jener Körper der Bodenbearbeitungsmaschine (oder nachfolgend auch nur kurz als "Maschine" bezeichnet), mit welchem das Bedienpaneel relativbeweglich verbunden ist und von welchem das Bedienpaneel getragen ist. Der Pultkörper kann folglich wenigstens teilweise oder sogar vollständig vom Maschinenrahmen oder/und von einem Fahrstandrahmen gebildet sein. Beispielsweise kann ein Boden des Pultkörpers vom Maschinenrahmen oder - im Falle eines relativ zum Maschinenrahmen verlagerbaren Fahrstands - von einem Fahrstandrahmen oder von einem Fahrstandboden gebildet sein. Um Missverständnissen vorzubeugen, sei an dieser Stelle klargestellt, dass vorliegend unter einem relativ zum Maschinenrahmen verlagerbaren Fahrstand lediglich ein aktiv verlagerbarer Fahrstand bezeichnet ist, welcher entweder durch entsprechende Aktuatoren oder manuell durch den Maschinenführer zwischen zwei unterschiedlichen Relativposition relativ zum Maschinenrahmen verlagerbar ist. Fahrstandböden, die in an sich bekannter Weise unter Zwischenanordnung einer Vibrationsdämpfung lediglich passiv-mikrobeweglich mit dem Maschinenrahmen verbunden sind, sind maschinenrahmenfeste Fahrstandböden im Sinne der vorliegenden Anmeldung.

Bevorzugt ist der Pultkörper jedoch wenigstens abschnittsweise gesondert vom Maschinenrahmen oder/und Fahrstandrahmen ausgebildet. Hierdurch kann für den gesondert ausgebildeten Abschnitt des Pultkörpers wenigstens abschnittsweise ein Material gewählt werden, welches für den Einsatz als Pultkörper ausreichend robust, jedoch von geringerer Dichte als das für den Maschinenrahmen oder/und den Fahrstandrahmen verwendete Material ist. Bevorzugt ist der Pultkörper zumindest abschnittsweise aus Kunststoff oder/und Metall gebildet. Ein Pultkörperabschnitt aus Kunststoff, insbesondere aus partikel- oder/und faserverstärktem Kunststoff, weist bei vorgegebenem Bauvolumen ein vorteilhaft niedriges Gewicht bei gleichzeitig hoher Festigkeit und hoher Kerbschlagzähigkeit auf. Als Kunststoff mit hoher Vandalismusfestigkeit kann bevorzugt ein auf Acrylnitril und Styrol basierender Kunststoff oder Kunststoffverbund verwendet werden, etwa Acrylester-Styrol-Acrylnitril (ASA) oder/und Acrylnitril-Butadien-Styrol (ABS). Besonders bevorzugt wird zur Nutzung der vorteilhaften Eigenschaften beider Materialien ein Verbundwerkstoff, umfassend ASA und ABS, verwendet. Dabei liegt das stärker witterungs- und wärmeformbeständigere ASA bevorzugt außen. Ein Pultkörperabschnitt aus Metall weist ebenfalls eine hohe Festigkeit auf und kann besonders vorteilhaft von Teilen des in der Regel ebenfalls aus Metall gebildeten Maschinenrahmens gebildet sein oder besonders dauerhaft mit Abschnitten des Maschinenrahmens aus Metall verbunden werden, etwa durch Schweißen.

Das Bedienpaneel kann zur Erzielung eines möglichst geringen Gewichts einen geschäumten Kunststoff umfassen, insbesondere geschäumtes Polyurethan. Dieser Werkstoff weist eine besonders vorteilhafte mechanische innere Dämpfung auf. Dies ist gerade beim Einsatz in stark vibrationsbelasteten Bodenbearbeitungsmaschinen, wie es beispielsweise Straßenfräsen sind, von Vorteil. Bevorzugt umfasst ein Grundkörper des Bedienpaneels den geschäumten Kunststoff. Ein darauf angeordnetes Bedienelement kann aus einem abweichenden Kunststoff oder/und aus Metall gebildet sein.

Da der Pultkörper über die bloße Halterung des Bedienpaneels hinaus weitere Aufgaben, wie etwa die Bereitstellung abschließbaren Stauraums, erfüllen kann, umfasst der Pultkörper vorteilhafterweise einen fahrstandfesten Gestellteil und - über das Bedienpaneel hinaus - wenigstens ein beweglich daran gelagertes Bewegungsteil. Der das Bedienpaneel in dessen Verstauungsstellung bedeckende Pultkörper-Abschnitt ist aus Gründen höherer Stabilität und höheren Widerstands gegen äußere Krafteinwirkung bevorzugt Bestandteil des fahrstandfesten Gestellteils.

Aus Gründen effizienter Bauraumausnutzung ist der das Bedienpaneel in der Verstauungsstellung bedeckende Abschnitt des Pultkörpers bevorzugt ein Wandabschnitt einer Gehäusewand des Pultkörpers. Aus Gründen möglichst hoher Festigkeit gegen Gewalteinwirkung bei gleichzeitig nicht übermäßiger Materialdichte und damit Bauteilgewicht, ist bevorzugt der das Bedienpaneel in der Verstauungsstellung bedeckende Abschnitt des Pultkörpers, wie oben dargelegt, aus Kunststoff, insbesondere aus dem ASA-ABS-Verbundwerkstoff gebildet.

Grundsätzlich kann daran gedacht sein, dass das Bedienpaneel in seiner Verstauungsstellung von dem Abschnitt des Pultkörpers überspannt wird, wobei der überspannende Abschnitt an einem oder an seinen beiden Endbereichen mit dem Bedienpaneel verbunden sein kann. Beispielsweise kann das Bedienpaneel beweglich an dem Abschnitt zur Relativbewegung mit diesem geführt sein, sodass es in seiner Verstauungsstellung von dem Abschnitt bedeckt ist und zur Verlagerung in die Bedienstellung von unter dem Wandabschnitt hervorgezogen werden kann. In diesem Falle kann das Bedienpaneel dann, wenn es sich in seiner Verstauungsstellung befindet, zusammen mit dem es bedeckenden Pultkörper-Abschnitt einen geschlossenen Wandbereich bilden, welcher eine Zugänglichkeit des wenigstens einen Bedienelements verhindert. Allerdings wäre eine Seite des Bedienpaneels vom Pultkörper nicht überspannt und somit auch in der Verstauungsstellung erreichbar. Da sich im Bedienpaneel sensible Elektronik befinden kann, welche Steuerungsbefehle von dem wenigstens einen Bedienelement erfassen und zu einer Maschinensteuerung weiterleiten kann, ist es vorteilhaft, wenn sich das Bedienpaneel in seiner Verstauungsstellung vollständig im Pultkörper befindet.

Somit kann zu einer Erzielung eines möglichst hohen Vandalismusschutzes des Bedienpaneels vorgesehen sein, dass der Pultkörper eine Verstauungsöffnung aufweist, durch welche hindurch das Bedienpaneel derart in die Verstauungsstellung verlagerbar ist, dass das Bedienpaneel in seiner Verstauungsstellung vollständig im Pultkörper aufgenommen ist. Der Pultkörper kann gleichsam ein Verstauungsfach aufweisen, in welches hinein das Bedienelement, ohne es vom Pultkörper zu trennen, in seine Verstauungsstellung verbracht werden kann.

Dann, wenn das Bedienpaneel, wie es häufig der Fall sein wird, eine im Wesentlichen flächige, insbesondere ebene Platte ist, deren Dickenabmessung wesentlich kleiner ist als ihre Abmessungen in den Haupterstreckungsrichtungen der flächigen Platte, kann bereits eine verhältnismäßig kleine und den Querschnittsabmessungen des Bedienpaneels - bei Betrachtung eines Querschnitts in einer zur Bewegungsbahn zwischen Verstauungsstellung und Bedienstellung orthogonalen Schnittebene - angepasste Verstauungsöffnung den Zugang zum Bedienpaneel in dessen Verstauungsstellung ausreichend erschweren.

Häufig trägt das Bedienpaneel jedoch wenigstens ein körperlich ausladendes Bedienelement, wie einen Bedienhebel (Joystick), welcher vom Bedienpaneel weg absteht, wobei dessen gelenkige Anbindung an das Bedienpaneel wiederum durch einen ebenfalls körperlich ausladenden Balg abgedeckt sein kann. Ein solcher Bedienhebel muss zur Verlagerung des Bedienpaneels in seine Verstauungsstellung ebenfalls durch die Verstauungsöffnung hindurch bewegt werden können. Dies setzt einer Verkleinerung der Verstauungsöffnung im Pultkörper Grenzen.

Zur weiteren Erhöhung einer Unzugänglichkeit des Bedienpaneels in dessen Verstauungsstellung weist daher das Bedienpult gemäß einer vorteilhaften Weiterbildung der vorliegenden Erfindung einen zwischen einer Öffnungsstellung und einer Sperrstellung beweglichen Deckel auf, welcher in seiner Sperrstellung die Verstauungsöffnung verschließt und so das in die Verstauungsstellung verlagerte Bedienpaneel gegen einen unbefugten Zugriff und folglich gegen eine unerwünschte Verlagerung aus der Verstauungsstellung sichert. In seiner Öffnungsstellung gibt der Deckel die Verstauungsöffnung für eine Bewegung des Bedienpaneels frei. Der Deckel kann ein Beispiel für ein oben genanntes Bewegungsteil des Pultkörpers sein. Bevorzugt ist der Deckel unverlierbar am Pultkörper angeordnet, insbesondere schwenkbar angelenkt. Es soll jedoch nicht ausgeschlossen sein, dass der Deckel zur Verbringung in seine Öffnungsstellung insgesamt vom Pultkörper abnehmbar ist.

Bevorzugt ist der Deckel wenigstens in seiner Sperrstellung unter Verwendung eines Schließgeheimnisses, wie Schlüssel oder Magnetcode und dergleichen, absperrbar, sodass die Verstauungsöffnung weiter gegen ein gewaltsames Öffnen gesichert werden kann. Zumindest kann die Zeitdauer, die ein Vandale benötigt, um sich gewaltsam Zugang zu dem bestimmungsgemäß verstauten Bedienpaneel zu verschaffen, erheblich erhöht werden, was erfahrungsgemäß die Chance des Bedienpaneels auf Unversehrtheit bei einem Vandalismusangriff erhöht.

Das wenigstens eine Bedienelement des Bedienpaneels kann eine beliebige Funktionseinrichtung der Bodenbearbeitungsmaschine steuern, wie etwa den Antrieb oder/und die Lenkung oder/und die Arbeitsvorrichtung oder/und die Lage und Orientierung des Maschinenrahmens relativ zum Untergrund, auf welchem die Maschine aufsteht oder/und Unterstützungsvorrichtungen, wie etwa Gebläse, Bewässerungsanlagen, Transportvorrichtungen und dergleichen. Üblicherweise wird ein Bedienpaneel mehr als ein Bedienelement aufweisen, um damit eine Vielzahl von Funktionseinrichtungen steuern zu können. Das wenigstens eine Bedienelement kann einen Kippschalter oder/und einen Drehschalter oder/und eine Taste oder/und ein Tastenfeld oder/und einen mehrachsigen Bedienhebel (Joystick) oder/und dergleichen umfassen.

Häufig ist der auf der Bodenbearbeitungsmaschine arbeitende Maschinenführer während seiner Tätigkeit wenigstens eingeschränkt der Witterung ausgesetzt. Auf dem Fahrstand herrscht dabei häufig Umgebungstemperatur, was gerade im Winter und in den Übergangszeiten auf die Dauer für den Maschinenführer unangenehm sein kann. Zur Erhöhung des Arbeitskomforts des Maschinenführers ist es daher vorteilhaft, wenn das Bedienpult eine Konvektions-Heizvorrichtung umfasst, welche dazu ausgebildet ist, Heizluft mit einer höheren Temperatur als die Umgebungslufttemperatur zu dem in die Bedienstellung verlagerten Bedienpaneel zu leiten. Die in der Konvektions-Heizvorrichtung transportierte Heizluft kann mittels Wärmetauscher durch Abwärme einer Brennkraftmaschine oder eines anderen sich im Betrieb erwärmenden Funktionseinrichtung erwärmt werden.

Die Heizluft führende Heizleitung kann dann vorteilhaft vollständig im Pultkörper aufgenommen sein. Sie ist daher von außen nicht zugänglich. Bevorzugt ist die Konvektions-Heizvorrichtung dazu ausgebildet, Heizluft von einem das Bedienpaneel in seiner Verstauungsstellung aufnehmenden Staubereich des Bedienpults, insbesondere des Pultkörpers, zu dem in die Bedienstellung verlagerten Bedienpaneel zu leiten.

Die Konvektions-Heizvorrichtung kann gemäß einer vorteilhaften Weiterbildung dazu ausgebildet sein, dann, wenn sich das Bedienpaneel in einer Bedienstellung befindet, wenigstens ein Bedienelement mit gegenüber der Umgebungsluft erwärmten Luft anzublasen, sodass das wenigstens eine angeblasene Bedienelement erwärmt werden kann. Üblicherweise wird dadurch auch in der Umgebung des wenigstens einen Bedienelements ein Strom erwärmter Luft bereitgestellt, sodass der Maschinenführer, wenn er mit seinen Händen nach dem wenigstens einen angeblasenen Bedienelement greift, in einen Luftstrom erwärmter Luft eintauchen kann. In dem bevorzugten Fall eines flächigen Bedienpaneels kann ein vorteilhaft großer Raum an und über der wenigstens ein Bedienelement tragenden Seite des Bedienpaneels durch den Luftstrom erwärmter Luft beströmt werden, wenn die Konvektions-Heizvorrichtung dazu ausgebildet ist, erwärmte Luft über das in eine Bedienstellung verlagerte flächige Bedienelement im Wesentlichen parallel zu dessen Flächenerstreckung auszublasen.

Besonders vorteilhaft kann dann, wenn sich das Bedienpaneel in seiner Verstauungsstellung vollständig im Pultkörper befindet, die Verstauungsöffnung zur Ausgabe erwärmter Luft genutzt werden. Die Konvektions-Heizvorrichtung ist daher bevorzugt dazu ausgebildet, die Heizluft durch die genannte Verstauungsöffnung hindurch zu dem in die Bedienstellung verlagerten Bedienpaneel auszugeben. Eine Ausgabedüse der Konvektions-Heizvorrichtung kann dabei im Inneren des Pultkörpers gelegen sein, also vom Fahrstand aus betrachtet hinter der Verstauungsöffnung des Pultkörpers, sodass auch die Ausgabedüse durch den oben genannten Deckel für Phasen des Nicht-Gebrauchs der Maschine abgedeckt und unzugänglich gemacht werden kann.

Da es bei einer translatorischen Verlagerung ausreichen kann, das Bedienpaneel zwar aus der Verstauungsstellung, aber nicht vollständig aus dem Pultkörper heraus zu verlagern, um die Maschine in wenigstens einem eingeschränkten, aber für einen konkreten Einsatzfall ausreichenden Umfang bedienen zu können, ist erfindungsgemäß vorgesehen, dass das Bedienpaneel translatorisch zwischen der Bedienstellung und der Verstauungsstellung verlagerbar ist.

Sind beispielsweise Fahrhebel an einem bei einer Verlagerung des Bedienpaneels aus der Verstauungsstellung heraus vorauseilenden Randbereich des Bedienpaneels vorgesehen, dann kann durch bereits geringfügiges Herausziehen des Bedienpaneels aus dem Pultkörper ein Fahrbetrieb der Maschine ermöglicht werden. Beispielsweise kann es für ein Verladen der Maschine auf einen Tieflader für einen Versand-Transport ausreichen, wenn lediglich Fahrgeschwindigkeit und Fahrtrichtung der Maschine steuerbar sind, nicht jedoch die Arbeitsvorrichtung und Unterstützungsvorrichtungen derselben. Bevorzugt ist das Bedienpaneel über einen Kabel- oder Leitungsschlepp mit einer Steuereinrichtung oder einer Signalleitung im Inneren des Bedienpult verbunden, sodass unabhängig von der Relativstellung des Bedienpaneels zum Pultkörper stets Steuerungseingaben an dem wenigstens einen Bedienelement zu einer Maschinensteuerung übertragen werden können.

Bei Bodenbearbeitungsmaschinen, insbesondere bei Straßenfräsen, ist es häufig besonders wichtig, dass der Maschinenführer die Maschine möglichst nah an ihrem Maschinen-Seitenrand bedienen kann, etwa um einen Bearbeitungs-Endbereich der Arbeitsvorrichtung und das damit erzielte Bearbeitungsergebnis überwachen zu können. Daher ist bevorzugt das Bedienpaneel parallel zu einer parallel zur Maschinenquerrichtung verlaufenden Nickachse der Bodenbearbeitungsmaschine translatorisch zwischen Verstauungsstellung und einer Bedienstellung verlagerbar. Somit kann der Maschinenführer mit einer translatorischen Verlagerung des Bedienpaneels aus seiner Verstauungsstellung heraus das Bedienpaneel längs der Nickachse einem Seitenrand der Maschine annähern.

Um gewährleisten zu können, dass eine Maschine an beiden Seitenrändern, also an beiden Endbereichen der Maschine längs der Nickachse, vom Maschinenführer bedienbar ist, kann daran gedacht sein, dass ein Bedienpaneel über eine sehr lange Strecke durch den Pultkörper hindurch verlagerbar ist. Der Pultkörper kann dann zwei längs der Bewegungsbahn des Bedienpaneels mit Abstand voneinander angeordnete Verstauungsöffnungen aufweisen, wobei das Bedienpaneel durch jede dieser Verstauungsöffnungen in den Pultkörper hinein und aus diesem heraus bewegt werden kann. Allerdings ist dabei die Breite des Pultkörpers, insbesondere der Abstand der beiden Verstauungsöffnungen voneinander, begrenzt, da ein und dasselbe Bedienpaneel im Pultkörper von beiden Verstauungsöffnungen ausgehend für den Maschinenführer erreichbar sein muss. Vorteilhafter ist es daher, wenn das Bedienpult zwei Bedienpaneele aufweist, welche unabhängig voneinander an unterschiedlichen Orten des Pultkörpers in je eine Verstauungsstellung bringbar sind, an welcher sie von je einem Pultkörper-Abschnitt bedeckt sind. Bevorzugt sind beide Bedienpaneele unabhängig voneinander durch je eine Verstauungsöffnung zur Verlagerung in ihre Verstauungsstellung in den Pultkörper einführbar. Die beiden Verstauungsöffnungen befinden sich bevorzugt mit Abstand voneinander an entgegengesetzten Seiten des Pultkörpers.

Für das zweite oder weitere Bedienpaneel und dessen Ausgestaltung und Anordnung sowie Beweglichkeit gilt das oben zum Bedienpaneel Gesagte entsprechend. Die beiden Bedienpaneele, welche bevorzugt längs einer koaxialen Bewegungsbahn zwischen ihren jeweiligen Stellungen: Verstauungsstellung und Bedienstellung, unabhängig voneinander beweglich sind, sind bevorzugt an entgegengesetzten Seiten des Pultkörpers aus diesem heraus aus ihrer jeweiligen Verstauungsstellung verlagerbar. So kann jedes der Bedienpaneele bei Verlagerung in eine Bedienstellung einem anderen von zwei entgegengesetzten Seitenrändern der Maschine angenähert werden. Die Verwendung von zwei Bedienpaneelen ermöglicht außerdem eine Anpassung der Anordnung des wenigstens einen Bedienelements auf dem jeweiligen Bedienpaneel an den dem Bedienpaneel zugeordneten Bedienort. So können die beiden Bedienpaneele beispielsweise bezüglich einer zur Rollachse (Maschinenlängsachse) und zur Gierachse (Maschinenhochachse) der Maschine parallelen Symmetrieebene spiegelsymmetrisch ausgebildet sein. Insbesondere kann eine Mehrzahl von Bedienelementen entsprechend spiegelsymmetrisch auf den Bedienpaneelen angeordnet sein.

Zur Rückmeldung an den Maschinenführer sowie gegebenenfalls auch zur Eingabe von Daten kann das Bedienpult eine Anzeigevorrichtung aufweisen. Eine Anzeigevorrichtung kann Teil des Bedienpaneels sein. Bevorzugt weist die Maschine eine von dem wenigstens einen Bedienpaneel gesondert ausgebildete Anzeigevorrichtung auf. Auch die Anzeigevorrichtung kann zum Schutz vor Vandalismusangriffen in Zeiten des Nicht-Gebrauchs der Maschine relativ zum Pultkörper bewegbar sein zwischen einer Betriebsstellung, in welcher eine Anzeigefläche der Anzeigevorrichtung derart zu einem vor dem Bedienpult gelegenen Bedienbereich weist, dass sie von einem Maschinenführer ablesbar ist, und einer Schutzstellung, in welcher die Anzeigefläche einer Gegenfläche des Pultkörpers gegenüberliegt.

Ganz grundsätzlich kann die Anzeigevorrichtung translatorisch zwischen der Betriebsstellung und der Schutzstellung bewegbar sein. Da ein Schutz der Anzeigefläche bei nicht-Gebrauch der Maschine jedoch durch Herstellen einer Gegenüberstellung von Anzeigefläche und Gegenfläche des Pultkörpers erzielt werden soll, ist bevorzugt die Anzeigevorrichtung zwischen ihrer Betriebsstellung und ihrer Schutzstellung schwenkbar. Bevorzugt ist eine Schwenkachse, um welche die Schwenkbewegung zwischen Betriebsstellung und Schutzstellung erfolgt, parallel zur Nickachse und damit auch parallel zu der bevorzugten translatorischen Bewegungsbahn des wenigstens einen Bedienpaneels.

Zum Schutz der Anzeigefläche der Anzeigevorrichtung, wobei die Anzeigefläche aus mehreren gesonderten Anzeige-Teilflächen gebildet sein kann, ist das Spaltmaß zwischen Anzeigevorrichtung und Gegenfläche in der Schutzstellung der Anzeigevorrichtung möglichst gering, vorzugsweise geringer als 5 mm. Um einen Hebelansatz in einem zwischen Anzeigevorrichtung und Gegenfläche in der Schutzstellung der Anzeigevorrichtung gebildeten Spalt möglichst vermeiden zu können, sollte das Spaltmaß zwischen Anzeigevorrichtung und Gegenfläche sogar weniger als 2 mm betragen. Besonders bevorzugt liegt die Anzeigevorrichtung in der Schutzstellung spaltfrei in Anlageeingriff an der Gegenfläche an.

Um eine gewaltsame Verstellung der Anzeigevorrichtung aus der Schutzstellung verhindern zu können, kann die Anzeigevorrichtung durch eine Festlegevorrichtung in der Schutzstellung gegen eine Bewegung aus der Schutzstellung in Richtung zur Betriebsstellung hin festlegbar sein. Zum Schutz der Festlegevorrichtung gegen unbefugte Manipulation ist diese bevorzugt vollständig im Pultkörper aufgenommen.

In einer konkreten bevorzugten Ausführungsform der vorliegenden Erfindung kann die Festlegevorrichtung konstruktiv derart ausgebildet sein, dass sie durch ein relativ zu einem fahrstandfesten Teil des Pultkörpers bewegliches Teil des Pultkörpers verstellbar ist zwischen einer Festlegestellung, in welcher die Festlegevorrichtung die Anzeigevorrichtung in der Schutzstellung festlegt, und einer Freigabestellung, in welcher die Anzeigevorrichtung aus der Schutzstellung in die Betriebsstellung bewegbar ist. Auf diese Weise ist ein zur Verstellung der Festlegevorrichtung zwischen Freigabestellung und Festlegestellung benötigtes Bauteil stets am Bedienpult vorhanden. Bevorzugt ist das bewegliche Teil des Pultkörpers, mit welchem die Festlegevorrichtung betätigt, also von der Freigabestellung in die Festlegestellung bewegt werden kann, der oben genannte Deckel, welcher eine Verstauungsöffnung verschließt. Dann kann mit Schließen des Deckels nicht nur das dem Deckel zugeordnete Bedienpaneel vor äußeren Zugriff, sondern auch die Anzeigevorrichtung vor einer Verstellung aus ihrer Schutzstellung heraus gesichert werden. Sind mehr als eine Verstauungsöffnung und folglich mehr als ein Deckel vorhanden, reicht es aus, wenn ein Deckel zur Betätigung der Festlegevorrichtung ausgebildet ist.

Die Festlegevorrichtung kann hierzu ein Gestänge und einen Eingriffsabschnitt aufweisen. Ein Betätigungsende des Gestänges wirkt vorzugsweise mit dem Deckel zusammen, etwa durch einfachen, vorzugsweise lösbaren, Anlageeingriff, sodass bei Verlagerung des Betätigungsendes des Gestänges durch entsprechende Bewegung des Deckels der Eingriffsabschnitt der Festlegevorrichtung in eine Position bewegt wird, in welcher er die Anzeigevorrichtung gegen eine Bewegung aus ihrer Schutzstellung heraus sichert. Bevorzugt ist der Eingriffsabschnitt in der Festlegestellung formschlüssig mit einer Sicherungsformation der in die Schutzstellung verlagerten Anzeigevorrichtung im Eingriff.

Um zu ermöglichen, dass der Maschinenführer die Anzeigevorrichtung an einer Vielzahl von möglichen Bedienorten des wenigstens einen Bedienpaneels einsehen kann, kann die Anzeigevorrichtung in der Betriebsstellung relativ zum Pultkörper ortsveränderlich gelagert sein. Damit eine Anzeigevorrichtung für mehrere Bedienpaneele verwendbar ist, ist die Anzeigevorrichtung bevorzugt außerhalb des Pultkörpers ortsveränderlich gelagert, etwa durch eine Führungsschiene. Der oben bereits genannten bevorzugten Ausführungsform folgend, ist die Anzeigevorrichtung bevorzugt längs der Nickachse der Bodenbearbeitungsmaschine ortsveränderlich. Die die Anzeigevorrichtung zur Bewegung an unterschiedliche Betriebsorte lagernde Führungsschiene ist bevorzugt am Pultkörper gehaltert.

Zur Bereitstellung eines weiteren Bedienortes für eine Bedienung der Maschine kann das Bedienpult ein Zusatzbedienpaneel aufweisen. Das Zusatzbedienpaneel, welches gesondert von dem oben genannten wenigstens einen Bedienpaneel ausgebildet ist, ist bevorzugt relativ zum Pultkörper unbeweglich an diesem vorgesehen. Zum Schutz vor einem Vandalismusangriff ist das Zusatzbedienpaneel bei Nicht-Gebrauch durch eine Abdeckung abdeckbar.

Um die Anzahl der zur Bildung des Bedienpultes und zum Schutz seiner einzelnen Bedienanordnungen notwendigen Bauteile gering zu halten, ist in einer bevorzugten Ausführungsform der Erfindung daran gedacht, dass die Abdeckung des Zusatzbedienpaneels die Anzeigevorrichtung umfasst oder ist und dass die Gegenfläche das Zusatzbedienpaneel umfasst oder ist. Somit können sich Anzeigevorrichtung und Zusatzbedienpaneel in vorteilhafter Weise gegenseitig vor einem Vandalismuszugriff schützen.

Um eine möglichst wenig raumgreifende Ausgestaltung des Zusatzbedienpaneels zu realisieren, kann dieses ein Folienbedienfeld, insbesondere eine Folientastatur, umfassen oder sein. Das Zusatzbedienpaneel kann dann im Verhältnis zu seiner Bedienfläche, in welcher eine Bedieneingabe möglich ist, sehr geringe Dicke aufweisen.

Es ist dabei nicht notwendig, dass das Zusatzbedienpaneel, insbesondere sein Folienbedienfeld, und die Anzeigevorrichtung in Gegenüberstellung gleichgroße Flächen einnehmen. Bevorzugt ist aus Gründen höherer Schutzwirkung die von der Anzeigevorrichtung in ihrer Schutzstellung abgedeckte Fläche größer als die vom Zusatzbedienpaneel oder wenigstens von seinem Folienbedienfeld eingenommene Fläche. Dadurch kann die Anzeigevorrichtung wenigstens das Folienbedienfeld, vorzugsweise das gesamte Zusatzbedienpaneel abdecken und vor Vandalismusangriff schützen.

Zur weiteren Festigkeitserhöhung sind bevorzugt der wenigstens eine ein Bedienpaneel in dessen Verstauungsstellung bedeckende Abschnitt des Pultkörpers und die Gegenfläche einstückig ausgebildet, besonders bevorzugt fügenahtfrei durch Urformung oder/und Umformung als monolithisches Bauteil hergestellt.

In Weiterbildung der oben bereits beschriebenen Erfindung kann dann die Anzeigevorrichtung die oben bereits genannte Sicherungsformation aufweisen, welche durch den Eingriffsabschnitt der Festlegevorrichtung in Formschlusseingriff genommen werden kann. Grundsätzlich kann zwar daran gedacht sein, die bevorzugt relativ zum Pultkörper ortsveränderliche Anzeigevorrichtung unabhängig von ihrem jeweiligen Betriebsort in die Schutzstellung verlagern zu können. Dies würde jedoch bedeuten, dass der Pultkörper über den im Wesentlichen gesamten Verlagerungsbereich der Anzeigevorrichtung eine passende Gegenfläche bereitstellen müsste. In einer bevorzugten Ausführungsform der vorliegenden Erfindung ist daher vorgesehen, dass die Sicherungsformation der Anzeigevorrichtung im Zusammenwirken mit einer Sicherungsgegenformation des Pultkörpers eine Bewegung in die Schutzstellung nur dann zulässt, wenn sich die Anzeigevorrichtung relativ zum Pultkörper in einer Position befindet, in welcher die Anzeigevorrichtung in Gegenüberstellung zu dem Zusatzbedienpaneel als der Gegenfläche bringbar ist. Beispielsweise kann die Sicherungsgegenformation eine Sicherungsausnehmung oder -Öffnung im Pultkörper sein, in welche die Sicherungsformation der Anzeigevorrichtung nur dann einführbar ist, wenn sich die Anzeigevorrichtung in einer vorbestimmten Position relativ zum Pultkörper befindet. In allen anderen Relativpositionen der Anzeigevorrichtung kollidiert die Sicherungsformation dagegen mit einem Abschnitt des Pultkörpers beim Versuch die Anzeigevorrichtung in die Schutzstellung zu verlagern und verhindert eine solche Verlagerung.

Zur Herstellung des bevorzugten Formschlusseingriffs weist die Sicherungsformation bevorzugt eine Formschlussformation für einen Formschluss-Festlegeeingriff mit dem Eingriffsabschnitt der Festlegevorrichtung auf.

Die vorliegende Erfindung wird nachfolgend anhand der beiliegenden Zeichnungen näher erläutert. Es stellt dar:
- Figur 1: eine grobschematische Seitenansicht einer Bodenbearbeitungsmaschine gemäß einer Ausnutzung der vorliegenden Erfindung,
- Figur 2: eine Vorderansicht des Bedienpults der Bodenbearbeitungsmaschine von Figur eins mit einem Bedienpaneel in der Bedienstellung und einem Bedienpaneel in der Verstauungsstellung,
- Figur 3: das Bedienpult von Figur 2, ebenfalls in der Vorderansicht, mit beiden Bedienpaneelen in der Bedienstellung,
- Figur 4: das Bedienpult der Figuren 2 und 3, wiederum in der Vorderansicht, mit beiden Bedienpaneelen in der Verstauungsstellung und
- Figur 5: das Bedienpult der Figuren 2 bis 4 in einer Seitenansicht.

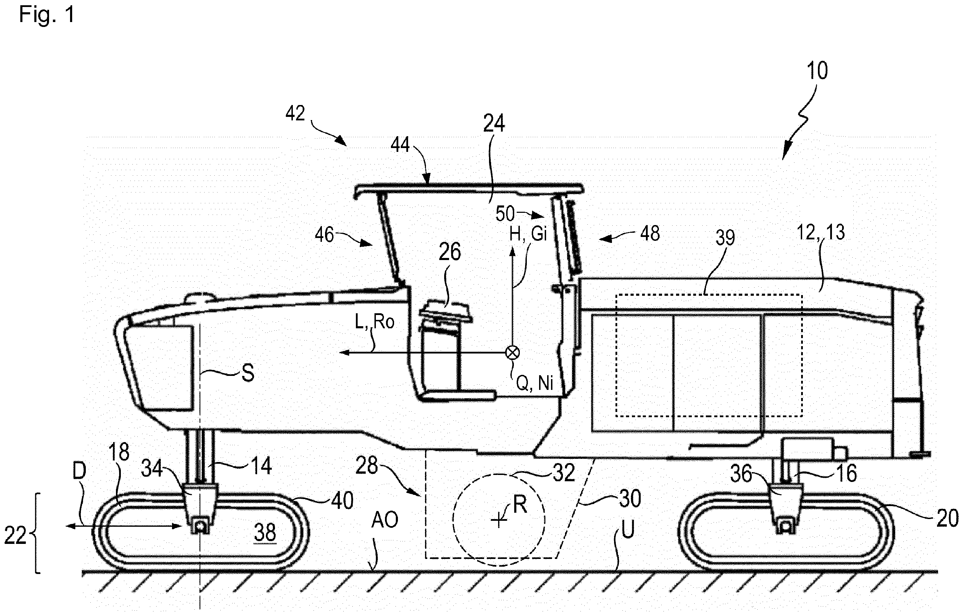

In Figur 1 ist eine erfindungsgemäße Ausführungsform einer Bodenbearbeitungsmaschine in Gestalt einer Boden- oder Straßen-Großfräse allgemein mit 10 bezeichnet. Sie umfasst einen Maschinenrahmen 12, welcher das Grundgerüst für einen Maschinenkörper 13 bildet. Der Maschinenkörper 13 umfasst den Maschinenrahmen 12 und mit dem Maschinenrahmen 12 verbundene, gegebenenfalls relativ zu diesem bewegliche Bauteile der Maschine 10.

Der Maschinenkörper 13 umfasst vordere Hubsäulen 14 und hintere Hubsäulen 16, welche einenends mit dem Maschinenrahmen 12 und anderenends mit vorderen Laufwerken 18 bzw. mit hinteren Laufwerken 20 verbunden sind. Der Abstand des Maschinenrahmens 12 von den Laufwerken 18 und 20 ist durch die Hubsäulen 14 und 16 veränderbar.

Die Laufwerke 18 und 20 sind beispielhaft als Kettenlaufwerke dargestellt. Einzelne oder alle Laufwerke 18 oder/und 20 können abweichend hiervon auch Radlaufwerke sein.

Der Betrachter von Figur 1 blickt auf die Bodenbearbeitungsmaschine oder kurz "Maschine" 10 in Richtung der zur Zeichenebene von Figur 1 orthogonalen Maschinenquerrichtung Q. Eine zur Maschinenquerrichtung Q orthogonale Maschinenlängsrichtung ist mit L bezeichnet und verläuft parallel zur Zeichenebene von Figur 1. Eine Maschinenhöhenrichtung H verläuft ebenfalls parallel zur Zeichenebene von Figur 1 und orthogonal zur Maschinenlängs- und zur Maschinenquerrichtung L bzw. Q. Die Pfeilspitze der Maschinenlängsrichtung L in Figur 1 weist in Vorwärtsrichtung. Die Maschinenhöhenrichtung H verläuft parallel zur Gierachse Gi der Maschine 10, die Maschinenlängsrichtung L verläuft parallel zur Rollachse Ro und die Maschinenquerrichtung Q verläuft parallel zur Nickachse Ni.

Die Bodenbearbeitungsmaschine 10 weist einen Fahrstand 24 auf, von dem aus ein Maschinenführer über ein Bedienpult 26 die Maschine 10 steuern kann.

Unter dem Maschinenrahmen 12 ist eine Arbeitsbaugruppe 28 angeordnet, hier beispielhaft als Fräsbaugruppe 28 mit einer in einem Fräswalzenkasten 30 aufgenommenen Fräswalze 32, die um eine in Maschinenquerrichtung Q verlaufende Fräsachse R rotierbar ist, um damit während einer Bodenbearbeitung Untergrundmaterial ausgehend von der Aufstandsoberfläche AO des Untergrunds U mit einer durch die relative Höhenlage des Maschinenrahmens 12 bestimmten Frästiefe abtragen zu können. Die Fräswalze 32 ist daher eine Arbeitsvorrichtung im Sinne der vorliegenden Anmeldung.

Die Höhenverstellbarkeit des Maschinenrahmens 12 durch die Hubsäulen 14 und 16 dient auch der Einstellung der Fräs- oder allgemein Arbeitstiefe der Maschine 10 bei der Bodenbearbeitung. Alternativ oder zusätzlich kann die Fräswalze 32 relativ zum Maschinenrahmen 12 höhenverstellbar an diesem aufgenommen sein. Es handelt sich bei der beispielhaft dargestellten Bodenbearbeitungsmaschine 10 um eine Großfräse, für die die Anordnung der Fräsbaugruppe 28 in Maschinenlängsrichtung L zwischen den vorderen und den hinteren Laufwerken 18 bzw. 20 typisch ist. Derartige Großfräsen oder auch bodenabtragende Maschinen im Allgemeinen können ein Transportband aufweisen, um abgetragenes Bodenmaterial von der Maschine 10 weg zu transportieren. Ein auch bei der Maschine 10 grundsätzlich vorhandenes Transportband ist aus Gründen besserer Übersichtlichkeit in Figur 1 nicht dargestellt.

In der Seitenansicht von Figur 1 nicht zu erkennen ist, dass die Maschine 10 sowohl in ihrem vorderen Endbereich als auch in ihrem hinteren Endbereich jeweils zwei Hubsäulen 14 bzw. 16 mit jeweils einem damit verbundenen Laufwerk 18 bzw. 20 aufweist. Die vorderen Hubsäulen 14 sind in weiterhin an sich bekannter Weise jeweils mittels einer Laufwerk-Verbindungsstruktur 34, etwa einer das Laufwerk 18 in Maschinenquerrichtung Q übergreifenden Verbindungsgabel, mit den Laufwerken 18 gekoppelt. Die hinteren Hubsäulen 16 sind mit ihrem jeweiligen Laufwerk 20 über eine mit der Laufwerk-Verbindungsstruktur 34 identisch aufgebaute Laufwerk-Verbindungsstruktur 36 verbunden. Die Laufwerke 18 und 20 sind im Wesentlichen identisch aufgebaut und bilden das Fahrwerk 22 der Maschine. Die Laufwerke 18 und 20 sind motorisch angetrieben, in der Regel durch einen nicht dargestellten Hydromotor.

Die Antriebskraftquelle der Maschine 10 bildet eine am Maschinenrahmen 12 aufgenommene Brennkraftmaschine 39. Durch sie wird die Fräswalze 32 im dargestellten Ausführungsbeispiel zur Drehung angetrieben. Durch die Leistung der Brennkraftmaschine 39 wird außerdem an der Maschine 10 ein Hydraulikdruckreservoir bereitgestellt, durch welches Hydromotoren und hydraulische Aktuatoren an der Maschine betreibbar sind. Die Brennkraftmaschine 39 ist somit auch Quelle der Vortriebskraft der Maschine 10.

Das Laufwerk 18 mit einer durch den Doppelpfeil D angedeuteten Laufrichtung weist im dargestellten Beispiel eine radial innere Aufnahme-und Führungsstruktur 38 auf, an der eine umlaufbare Laufkette 40 angeordnet und zur Umlaufbewegung geführt ist.

Die Hubsäule 14 und mit ihr das Laufwerk 18 ist durch eine nicht näher dargestellte Lenkvorrichtung um eine Lenkachse S drehbar. Bevorzugt zusätzlich, aber auch alternativ kann die Hubsäule 16 und mit ihr das Laufwerk 20 durch eine Lenkvorrichtung um eine zur Lenkachse S parallele Lenkachse drehbar sein.

Der Fahrstand 24 ist von einem mittels einer Bewegungsführung 50 heb- und senkbaren Schutzdachaufbau 42 bedeckt, welcher ein Schutzdach 44 umfasst, das über eine vordere Scheibenanordnung 46 und eine hintere Wandungsanordnung 48 mit dem Maschinenrahmen 12 bzw. Maschinenkörper 13 verbunden ist.

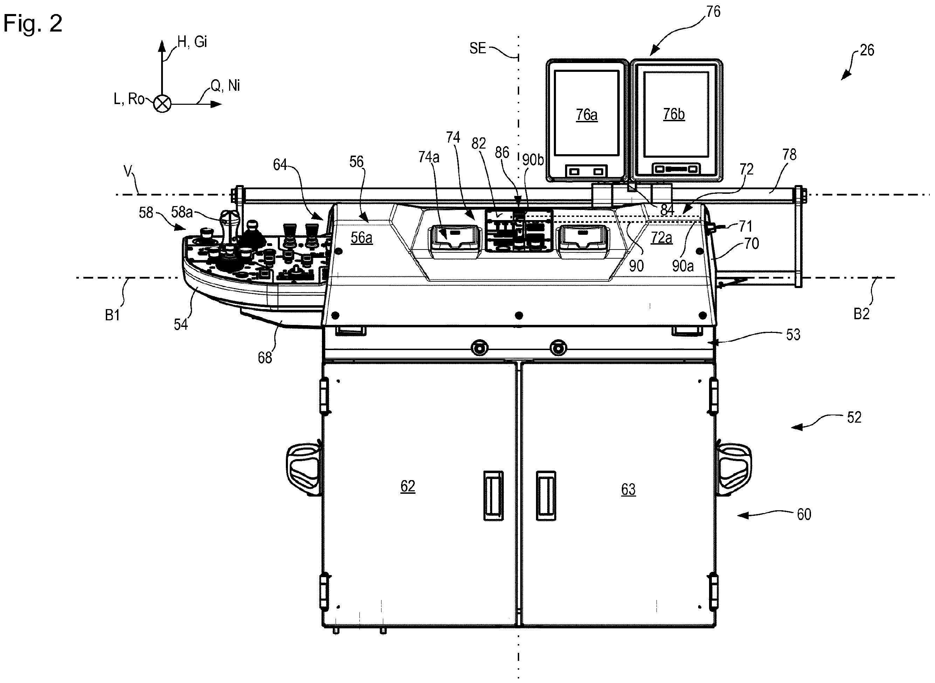

In Figur 2 ist das Bedienpult 26 in der Vorderansicht, also von einer Betrachtungsposition eines die Maschine 10 in einem Bedienbereich bedienenden Maschinenführers aus dargestellt. Das Bedienpult 26 weist einen Pultkörper 52 und ein erstes, relativ zum Pultkörper 52 längs einer zur Nickachse Ni parallelen Bewegungsbahn B1 bewegliches Bedienpaneel 54 auf. Das Bedienpaneel 54 befindet sich in Figur 2 in seiner vollständig aus einem Verstauungsfach 56 des Pultkörpers 52 herausgezogenen Bedienstellung, in welcher alle auf dem Bedienpaneel 54 angeordneten Bedienelemente 58 für den Maschinenführer bestimmungsgemäß zugänglich sind.

Der Pultkörper 52 ist aus einem Materialmix aus Metall einerseits und aus robustem Kunststoffmaterial mit geringer Dichte und damit mit geringem Gewicht andererseits gefertigt, wie beispielsweise aus styrolbasiertem, etwaig zur weiteren Festigkeitserhöhung faserverstärktem, Kunststoff.

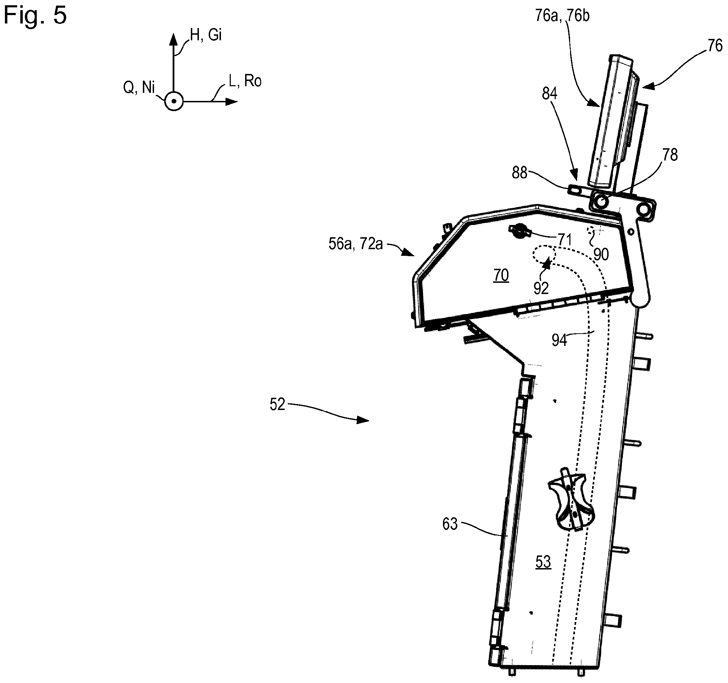

Ein unterer Teil des Bedienpult 26 bzw. des Pultkörpers 52, welcher auf dem in Figur 2 nicht dargestellten Fahrstandboden aufsteht und an diesem befestigt ist, ist beispielsweise als Schaltschrank 60 zur Aufnahme von elektrischen Schaltungen ausgebildet. Dieser Teil ist bevorzugt aus Metall gebildet. Zwei schwenkbare als Bewegungsteile an einem fahrstandfesten Gestellteil 53 (siehe Figur 5) des Pultkörpers 52 angelenkte Türen 62 und 63 verschließen den Schaltschrank 60.

Das Bedienpult 26 ist bezüglich einer zur Gierachse Gi und zur Rollachse Ro parallelen Spiegelsymmetrieebene SE im Wesentlichen spiegelsymmetrisch aufgebaut.

Mit den Bedienelementen 58 des ersten Bedienpaneels 54 ist die Bodenbearbeitungsmaschine 10 bedienbar.

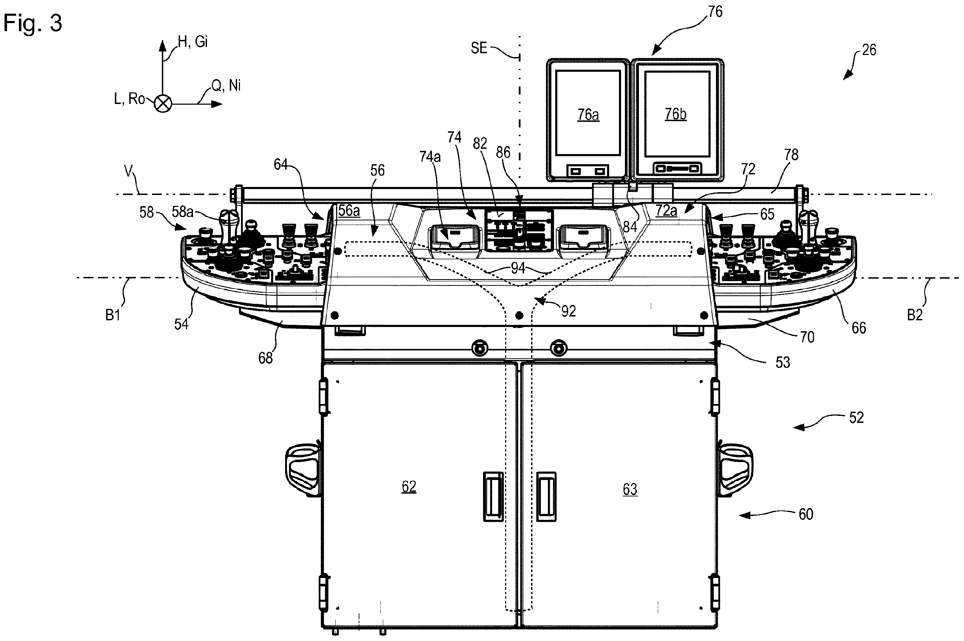

Zum Schutz vor Vandalismusangriffen ist das erste Bedienpaneel 54 längs der Bewegungsbahn B1 durch eine Verstauungsöffnung 64 auf der in Figur 2 linken Seite des oberen Teils des Pultkörpers 52 längs der Nickachse Ni vollständig in den Pultkörper 52 einführbar. Es befindet sich dann, wie das in Figur 2 nicht dargestellte, in Figur 3 allerdings dargestellte zweite Bedienpaneel 66, vollständig in dem für das erste Bedienpaneel 54 am Pultkörper 52 vorgesehenen Staufach 56.

Zur Aufnahme von räumlich ausladenden Bedienelementen 58, wie etwa einem Joystick 58a, ist das Staufach 56 des ersten Bedienpaneels 54 in seinem oberen Bereich 56a kuppelförmig ausgebildet. Dieser obere Bereich 56a ist bevorzugt aus einem Verbundwerkstoff aus ASA und ABS gebildet.

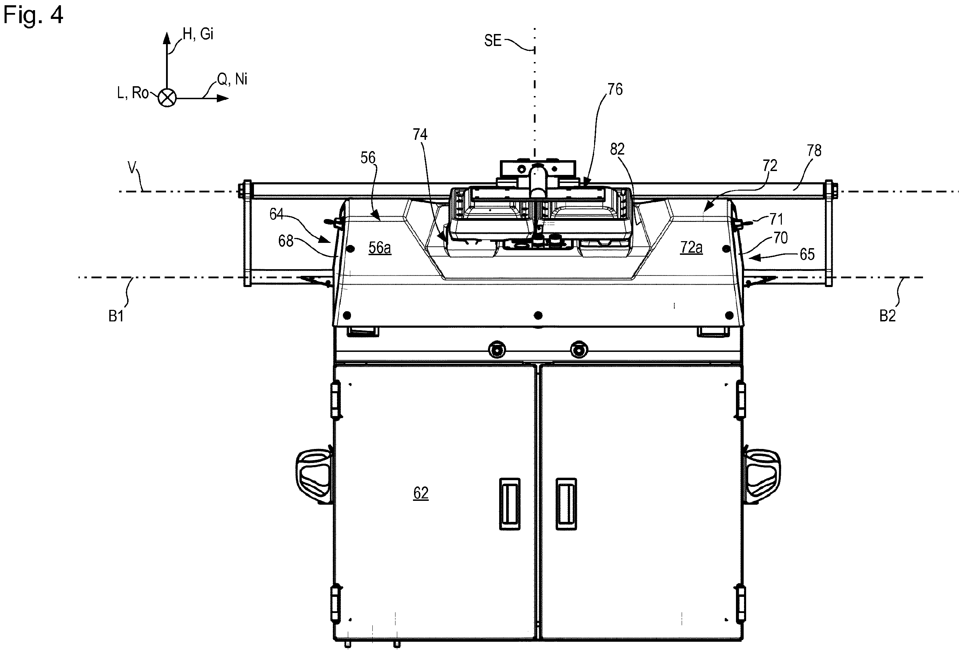

Die Verstauungsöffnung 64 ist durch einen schwenkbar am Pultkörper 52 angelenkten Deckel 68 verschließbar. Der Deckel 68, welcher ebenfalls bevorzugt aus ASA oder und ABS hergestellt ist, ist in den Figuren 2 und 3 in seiner Öffnungsstellung und in Figur 4 in seiner Sperrstellung gezeigt. In der Sperrstellung ist der Deckel 68, ebenso wie der ihm auf der entgegengesetzten Seite des Pultkörpers 52 gegenüberliegende Deckel 70 des zweiten Bedienpaneels 66 absperrbar, um die Deckel 68 und 70 gegen ein unbefugtes Öffnen zu sichern und somit einen unbefugten Zugang zu den Bedienpaneelen 54 und 66 zu verhindern. Ein Schlüssel 71, mit welchem der zweite Deckel 70 abschließbar ist, ist in den Figuren 2, 4 und 5 dargestellt.

Abweichend von den in Figur 3 gezeigten, vollständig aus dem Pultkörper 52 ausgezogenen Bedienstellungen des ersten und des zweiten Bedienpaneels 54 bzw. 66 kann das erste Bedienpaneel 54 oder/und das zweite Bedienpaneel 66 auch nur teilweise aus dem Pultkörper 52 in eine Bedienstellung herausgezogen werden, wenn etwa nur eine Teilmenge der Bedienelemente 58 benötigt wird, welche in Auszugsrichtung aus dem Pultkörper 52 an einem vorauseilenden Endbereich des Bedienpaneelen 54 oder/und 66 angeordnet ist.

Die Bedienpaneele 54 und 66 sind unabhängig voneinander aus ihren Staufächern 56 bzw. 72 ausziehbar und in diese einführbar.

Zusätzlich zu den beiden relativ zum Pultkörper 52 beweglichen, insbesondere translatorisch beweglichen, Bedienpaneelen 54 und 66 weist der Pultkörper 52 in einem Bereich zwischen den oberen kuppelförmig ausgebildeten Bereichen 56a und 72a (der kuppelförmige obere Bereich 72a ist Teil des Staufachs 72, welches gemäß der oben beschriebenen Spiegelsymmetrie zur Verstauung des in Figur 3 gezeigten zweiten Bedienpaneels 66 am Pultkörper 52 vorgesehen ist) ein Zusatzbedienpaneel 74 auf, welches ortsfest am Pultkörper 52 angeordnet ist. Das Zusatzbedienpaneel 74 umfasst ein raumsparendes Folienbedienfeld 74a, welches flach am Pultkörper 52 angeordnet werden kann, ohne stark über eine Außenfläche des Anordnungsbereichs am Pultkörper 52 nach außen oder auch nach innen vorzustehen.

Auch der obere Bereich 72a ist bevorzugt aus ASA oder/und ABS gebildet, ebenso wie der Deckel 70.

Weiter weist das Bedienpult 26 eine gesondert von den Bedienpaneelen 54 und 66 sowie weiter gesondert von dem Zusatzbedienpaneel 74 ausgebildete Anzeigevorrichtung 76 auf. Die Anzeigevorrichtung 76, welche zwei Anzeigeflächen 76a und 76b aufweist, ist an einer Führungsschiene 78 längs einer zur Nickachse Ni parallelen Verlagerungsachse V verlagerbar. Die Anzeigevorrichtung 76 kann somit längs der Nickachse Ni an einen Bedienort des ersten Bedienpaneels 54, an einen Bedienort des Zusatzbedienpaneels 74 oder an einen Bedienort des zweiten Bedienpaneels 66 verbracht werden und dort dem jeweils arbeitenden Maschinenführers Informationen anzeigen. Die Anzeigeflächen 76a und 76b können berührungssensitiv als Touchscreen auch zur Eingabe von Daten ausgebildet sein.

Die Anzeigevorrichtung 76 ist nicht nur längs der Führungsschiene 78 translatorisch verlagerbar, sondern ist aufgrund einer Lagerung durch eine Wälzkörperbuchse auch um die Führungsschiene 78 zwischen ihrer in den Figuren 2, 3 und 5 dargestellten Betriebsstellung und ihrer in Figur 4 gezeigten Schutzstellung schwenkbar.

In ihrer Betriebsstellung (siehe Figuren 2, 3 und 5) ist die Anzeigevorrichtung 76 durch einen im Bedienbereich vor dem Bedienpult 26 stehenden Maschinenführer bestimmungsgemäß ablesbar. In der Schutzstellung gemäß Figur 4 liegen die Anzeigeflächen 76a und 76b der Anzeigevorrichtung 76 einer das Zusatzbedienpaneel 74 aufweisenden Gegenfläche 82 des Pultkörpers 52 in geringem Abstand oder bevorzugt spaltfrei gegenüberliegen.

Die Gegenfläche 82 des Pultkörpers 52 ist ebenso wie Gehäuseteile der Anzeigevorrichtung 76, welche in der Schutzstellung der Anzeigevorrichtung 76 vom Pultkörper 52 wegweisen und daher zugänglich sind, aus ASA oder/und ABS hergestellt. Bevorzugt sind die Bereiche 56a, 72a und 82 des Pultkörpers 52 einstückig ausgebildet, aus Gründen erhöhter Festigkeit besonders bevorzugt durch fügenahtfreies Herstellen als monolithisches Bauteil.

Das zweite Bedienpaneel 66, das ebenfalls translatorisch relativ zum Pultkörper 52 bewegbar ist, und zwar längs einer zur Bewegungsbahn B1 des ersten Bedienpaneels 54 koaxialen Bewegungsbahn B2, befindet sich in Figur 4 in seiner Verstauungsstellung. Auch das erste Bedienpaneel 54 befindet sich in seiner Verstauungsstellung, wobei sich die beiden Deckel 68 und 70 jeweils in ihren Sperrstellungen befinden und die jeweiligen Verstauungsöffnungen 64 und 65 verschließen. Figur 4 zeigt also eine Anordnung des Bedienpults 26, in welchem das Bedienpult und seine Bedienpaneele 54, 66 und 74 sowie die Anzeigevorrichtung 76 maximal gegen einen Vandalismusangriff geschützt sind.

Zwar ist auch die mehrere Millimeter dicke Wandung des Pultkörpers 52 aus Metall oder/und aus Kunststoff, insbesondere aus ASA oder/und ABS, gewünschtenfalls mit Partikel- oder/und Faserfüllung, mit ausreichend Gewalt oder krimineller Energie überwindbar, jedoch benötigt ein Angreifer zur ernsthaften Beschädigung des Bedienpults 26 erheblich mehr Zeit als wenn die Bedienpaneele ungeschützt zugänglich wären. Somit muss ein Vandale über einen längeren Zeitraum in Kauf nehmen, beim Ausleben seiner Zerstörungswut Lärm zu erzeugen und somit entdeckt zu werden.

In Figur 5 ist eine zur gemeinsamen Bewegung mit der Anzeigevorrichtung 76 verbundene Sicherungsformation 84 besonders gut erkennbar, welche hauptsächlich parallel zur Rollachse Ro, geringfügig zu dieser abgewinkelt, von der Anzeigevorrichtung 76 weg absteht. Die beispielhaft als Stab ausgebildete Sicherungsformation 84 ist beim Verschwenken der Anzeigevorrichtung 76 aus ihrer Betriebsstellung in die in Figur 4 gezeigte Schutzstellung in eine Sicherungsausnehmung 86 im Bereich des Zusatzbedienpaneels 74 einführbar. Die Sicherungsausnehmung 86 ist dabei so bemessen, dass die Sicherungsformation 84 nur dann in sie einführbar ist, wenn sich die Anzeigevorrichtung 76 so genau in der Quermitte des Pultkörpers 52 befindet, dass sie beim Verschwenken um die Führungsschiene 78 auf dem Zusatzbedienpaneel 74 bzw. auf der das Zusatzbedienpaneel 74 aufweisenden Gegenfläche 82 zu liegen kommt. Somit verbergen und schützen sich die Anzeigevorrichtung 76 und das Zusatzbedienpaneel 74 wechselseitig dann, wenn die Anzeigevorrichtung 76 sich in ihrer Schutzstellung befindet, vor einem unbefugten Zugriff, insbesondere vor einem gewaltsamen Zugriff.

Wie in Figur 5 zu erkennen ist, weist die Sicherungsformation 84 eine sie parallel zur Nickachse Ni durchsetzende Öse 88 als Formschlussformation auf.

Wie der Übersichtlichkeit halber nur in den Figuren 2 und 5 dargestellt ist, ist im Inneren des Pultkörpers 52 eine Festlegevorrichtung 90 in Gestalt einer Stange vorgesehen. Der Deckel 70 kommt bei Annäherung an seine Sperrstellung in Anlageeingriff mit einem Betätigungsende 90a der Festlegevorrichtung 90. Die Festlegevorrichtung 90, welche in ihre Freigabestellung vorgespannt ist, in der sie die Sicherungsausnehmung 86 nicht durchsetzt, wird nach Herstellung des Anlageeingriffs mit dem Deckel 70 durch Schließen des Deckels 70 (überführen des Deckels in seine in Figur 2 gezeigte Sperrstellung) gegen die in die Freigabestellung wirkende Vorspannkraft in die Festlegestellung bewegt, in welcher ein Eingriffsabschnitt 90b die Sicherungsausnehmung 86 durchsetzt. Dann, wenn sich die Sicherungsformation 84 in der Sicherungsausnehmung 86 befindet, weil die Anzeigevorrichtung 76 in ihre in Figur 4 gezeigte Schutzstellung verbracht wurde, durchsetzt der Eingriffsabschnitt 90a der Festlegevorrichtung 90 in ihrer Festlegestellung die Öse 88 der Sicherungsformation 84 und stellt so einen Formschlusseingriff her, welcher eine Verlagerung der Anzeigevorrichtung 76 aus der erreichten Schutzstellung verhindert. Das Bedienpult 26 ist dann nahezu hermetisch abgeschlossen. Alle empfindlichen und für die Maschinenführung notwendigen Bauteile sind von der robusten Hülle des Pultkörpers 52 umgeben und nicht unmittelbar einem Gewaltangriff zugänglich.

Beim Öffnen des Deckels 70 wird die Festlegevorrichtung 90 durch ihre Vorspannung in die Freigabestellung verlagert, in welcher die Sicherungsausnehmung 86 und mit ihr die Öse 88 nicht mehr durch den Eingriffsabschnitt 90b durchsetzt sind. Die Anzeigevorrichtung 76 kann dann wieder zurück in ihre Betriebsstellung verbracht werden.

In den Figuren 3 und 5 ist strichliniert eine im Inneren des Pultkörpers 52 angeordnete Konvektions-Heizvorrichtung mit 92 bezeichnet. Die Konvektions-Heizvorrichtung umfasst im Wesentlichen eine Heizluftleitung 94, welche den Pultkörper 52 zum Boden hin durchsetzt. So ist an die Heizluftleitung 94 eine weitere, verglichen mit der Umgebungsluft wärmere Luft führende Heizluftleitung der Maschine 10 anschließbar. Von der Heizluftleitung der Maschine 10 geführte Heizluft kann somit auch durch die Heizluftleitung 94 des Bedienpults 26 bzw. des Pultkörpers 52 geleitet werden. Auslässe der Konvektions-Heizvorrichtung 92 befinden sich im Inneren des Pultkörpers 52, jeweils hinter den Verstauungsöffnungen 64 und 65. Die Heizvorrichtung 92 bläst Heizluft jeweils durch die Verstauungsöffnungen 64 und 65 im Wesentlichen parallel zu den jeweiligen Bewegungsbahnen B1 und B2 in Richtung vom Bedienpult 26 weg über die mit Bedienelementen 58 bestückten Flächen der Bedienpaneele 54 und 66. So kann über den jeweiligen Bedienpaneelen 54 oder/und 66 ein Warmluftbereich erzeugt werden, in den der Maschinenführer seine Hände eintaucht, wenn er nach Bedienelementen 58 greift. Die Heizvorrichtung 92 kann insgesamt oder hinsichtlich eines einem Bedienpaneel 54 oder 66 zugeordneten Astes abschaltbar sein, um zu vermeiden, dass Heizluft gegen einen geschlossenen Deckel 68 oder 70 strömt. Die Abschaltbarkeit kann in an sich bekannter Weise durch nicht dargestellte betätigbare Ventile oder auch durch ein abschaltbares Gebläse realisiert sein.

## Patentansprüche

1. Bodenbearbeitungsmaschine (10), wie etwa Straßenfräse (10), Recycler, Stabilisierer oder Surface-Miner, mit einem Fahrwerk (22) und einem vom Fahrwerk (22) getragenen Maschinenrahmen (12), wobei die Bodenbearbeitungsmaschine (10) eine Arbeitsvorrichtung (32) zur Bodenbearbeitung aufweist und wobei am Maschinenrahmen (12) ein Fahrstand (24) mit einem Bedienpult (26) zur Steuerung wenigstens einer Funktionseinrichtung (32, 39) der Bodenbearbeitungsmaschine (10) vorgesehen ist, wobei das Bedienpult (26) einen Pultkörper (52) und ein relativ zum Pultkörper (52) bewegliches Bedienpaneel (54, 66) mit wenigstens einem einer Funktionseinrichtung (32, 39) zu dessen Steuerung zugeordneten oder zuordenbaren Bedienelement (58) aufweist, wobei das Bedienpaneel (54, 66) verlagerbar ist zwischen einer Verstauungsstellung und einer Bedienstellung, wobei in der Verstauungsstellung das wenigstens eine Bedienelement (58) durch einen Abschnitt (56a, 72a) des Pultkörpers (52) bedeckt ist und wobei in der Bedienstellung wenigstens ein Bedienelement (58) unbedeckt und daher für seine Bedienung durch einen Maschinenführer zugänglich ist,
**dadurch gekennzeichnet, dass** das Bedienpaneel (54, 66) translatorisch zwischen der Bedienstellung und der Verstauungsstellung verlagerbar ist.

2. Bodenbearbeitungsmaschine (10) nach Anspruch 1,
**dadurch gekennzeichnet, dass** der Pultkörper (52) eine Verstauungsöffnung (64, 65) aufweist, durch welche hindurch das Bedienpaneel (54, 66) derart in die Verstauungsstellung verlagerbar ist, dass das Bedienpaneel (54, 66) in seiner Verstauungsstellung vollständig im Pultkörper (52) aufgenommen ist.

3. Bodenbearbeitungsmaschine (10) nach Anspruch 1 oder 2,
**dadurch gekennzeichnet, dass** der Pultkörper (52) einen zwischen einer Öffnungsstellung und einer Sperrstellung beweglichen Deckel (68, 70) aufweist, welcher in seiner Sperrstellung die Verstauungsöffnung (64, 65) verschließt und so das in die Verstauungsstellung verlagerte Bedienpaneel (54, 66) gegen eine Verlagerung aus der Verstauungsstellung sichert, und welcher in seiner Öffnungsstellung die Verstauungsöffnung (64, 65) für eine Bewegung des Bedienpaneels (54, 66) freigibt.

4. Bodenbearbeitungsmaschine (10) nach einem der vorhergehenden Ansprüche,
**dadurch gekennzeichnet, dass** das Bedienpult (26) eine Konvektions-Heizvorrichtung (92) umfasst, welche dazu ausgebildet ist, Heizluft mit einer höheren Temperatur als die Umgebungslufttemperatur zu dem in die Bedienstellung verlagerten Bedienpaneel (54, 66) zu leiten.

5. Bodenbearbeitungsmaschine (10) nach Anspruch 4, unter Einbeziehung des Anspruchs 2,
**dadurch gekennzeichnet, dass** die Konvektions-Heizvorrichtung (92) die Heizluft von einem das Bedienpaneel (54, 66) in seiner Verstauungsstellung aufnehmenden Staubereich (56, 72) des Bedienpults (26) durch die Verstauungsöffnung (64, 65) hindurch zu dem in die Bedienstellung verlagerten Bedienpaneel (54, 66) ausgibt.

6. Bodenbearbeitungsmaschine (10) nach einem der vorhergehenden Ansprüche,
**dadurch gekennzeichnet, dass** das Bedienpult (26) zwei Bedienpaneele (54, 66) aufweist, wobei das Bedienpult (26) in Bezug auf jedes der zwei Bedienpaneele (54, 66) gemäß einem der vorhergehenden Ansprüche ausgestaltet ist.

7. Bodenbearbeitungsmaschine (10) nach einem der vorhergehenden Ansprüche,
**dadurch gekennzeichnet, dass** das Bedienpult (26) eine Anzeigevorrichtung (76) aufweist, welche relativ zum Pultkörper (52) bewegbar ist zwischen einer Betriebsstellung, in welcher eine Anzeigefläche (76a, 76b) der Anzeigevorrichtung (76) derart zu einem vor dem Bedienpult (26) gelegenen Bedienbereich weist, dass sie von einem Maschinenführer ablesbar ist, und einer Schutzstellung, in welcher die Anzeigefläche (76a, 76b) einer Gegenfläche (82) des Pultkörpers (52) gegenüberliegt.

8. Bodenbearbeitungsmaschine (10) nach Anspruch 7,
**dadurch gekennzeichnet, dass** die Anzeigevorrichtung (76) durch eine Festlegevorrichtung (90) in der Schutzstellung gegen eine Bewegung aus der Schutzstellung in Richtung zur Betriebsstellung hin festlegbar ist, wobei bevorzugt die Festlegevorrichtung (90) vollständig im Pultkörper (52) aufgenommen ist.

9. Bodenbearbeitungsmaschine (10) nach Anspruch 8,
**dadurch gekennzeichnet, dass** die Festlegevorrichtung (90) durch ein relativ zu einem fahrstandfesten Teil (53) des Pultkörpers (52) bewegliches Teil (70) des Pultkörpers (52), insbesondere durch den Deckel (70) des Anspruchs 3, verstellbar ist zwischen einer Festlegestellung, in welcher die Festlegevorrichtung (90) die Anzeigevorrichtung (76) in der Schutzstellung festlegt, und einer Freigabestellung, in welcher die Anzeigevorrichtung (76) aus der Schutzstellung in die Betriebsstellung bewegbar ist.

10. Bodenbearbeitungsmaschine (10) nach Anspruch einem der Ansprüche 7 bis 9,
**dadurch gekennzeichnet, dass** die Anzeigevorrichtung (76) in der Betriebsstellung relativ zum Pultkörper (52) ortsveränderlich gelagert ist, insbesondere längs der Nickachse (Ni) der Bodenbearbeitungsmaschine (10) ortsveränderlich ist.

11. Bodenbearbeitungsmaschine (10) nach einem der vorhergehenden Ansprüche,
**dadurch gekennzeichnet, dass** das Bedienpult (26) ein Zusatzbedienpaneel (74) aufweist, welches relativ zum Pultkörper (52) unbeweglich an diesem vorgesehen ist, wobei das Zusatzbedienpaneel (74) bei Nicht-Gebrauch durch eine Abdeckung (76) abdeckbar ist.

12. Bodenbearbeitungsmaschine (10) nach Anspruch 11, unter Einbeziehung wenigstens eines der Ansprüche 7 bis 10,
**dadurch gekennzeichnet, dass** die Abdeckung (76) des Zusatzbedienpaneels (74) die Anzeigevorrichtung (76) umfasst oder ist und dass die Gegenfläche (82) das Zusatzbedienpaneel (74) umfasst oder ist.

13. Bodenbearbeitungsmaschine (10) nach Anspruch 12, unter Einbeziehung wenigstens des Anspruchs 10,
**dadurch gekennzeichnet, dass** die Anzeigevorrichtung (76) eine Sicherungsformation (84) aufweist, welche im Zusammenwirken mit einer Sicherungsgegenformation (86) des Pultkörpers (52) eine Bewegung in die Schutzstellung nur dann zulässt, wenn sich die Anzeigevorrichtung (76) relativ zum Pultkörper (52) in einer vorbestimmten Position befindet, in welcher die Anzeigevorrichtung (76) in Gegenüberstellung zu dem Zusatzbedienpaneel (74) bringbar ist.

14. Bodenbearbeitungsmaschine (10) nach Anspruch 13,
**dadurch gekennzeichnet, dass** die Sicherungsformation (84) eine Formschlussformation (88) für einen Formschluss-Festlegeeingriff mit einem Eingriffsabschnitt (90b) der Festlegevorrichtung (90) aufweist.

## Claims

1. An earth working machine (10), for example a road milling machine (10), recycler, stabilizer, or surface miner, having a propelling unit (22) and a machine frame (12) carried by the propelling unit (22); the earth working machine (10) comprising a working apparatus (32) for earth working; and an operator's platform (24), having an operating console (26) for controlling at least one functional device (32, 39) of the earth working machine (10), being provided on the machine frame (12); the operating console (26) comprising a console body (52) and an operating panel (54, 66) that is movable relative to the console body (52) and has at least one operating element (58) associated or associatable with a functional device (32, 39) for control thereof, wherein the operating panel (54, 66) is displaceable between a stowed position and an operating position, in the stowed position the at least one operating element (58) being covered by a portion (56a, 72a) of the console body (52); and in the operating position at least one operating element (58) being uncovered and being therefore accessible for operation thereof by a machine operator,
**characterized in that** the operating panel (54, 66) is displaceable translationally between the operating position and the stowed position.

2. The earth working machine (10) according to Claim 1,
**characterized in that** the console body (52) comprises a stowage opening (64, 65) through which the operating panel (54, 66) is displaceable into the stowed position in such a way that the operating panel (54, 66), in its stowed position, is received completely in the console body (52).

3. The earth working machine (10) according to Claim 1 or 2,
**characterized in that** the console body (52) comprises a cover (68, 70), movable between an open position and a locked position, which in its locked position closes off the stowage opening (64, 65) and thereby protects the operating panel (54, 66), displaced into the stowed position, against displacement out of the stowed position, and which in its open position exposes the stowage opening (64, 65) for movement of the operating panel (54, 66).

4. The earth working machine (10) according to one of the preceding claims,
**characterized in that** the operating console (26) encompasses a convective heating apparatus (92) that is embodied to direct heated air, having a higher temperature than the ambient air temperature, to the operating panel (54, 66) displaced into the operating position.

5. The earth working machine (10) according to Claim 4, incorporating Claim 2,
**characterized in that** the convective heating apparatus (92) outputs heated air from a storage region (56, 72) that receives the operating panel (54, 66) in its stowed position, through the stowage opening (64, 65), to the operating panel (54, 66) displaced into the operating position.

6. The earth working machine (10) according to one of the preceding claims,
**characterized in that** the operating console (26) comprises two operating panels (54, 66), the operating console (26) being configured, with reference to each of the two operating panels (54, 66), in accordance with one of the preceding claims.

7. The earth working machine (10) according to one of the preceding claims,
**characterized in that** the operating console (26) comprises a display apparatus (76) that is movable relative to the console body (52) between an operating position in which a display surface (76a, 76b) of the display apparatus (76) faces toward an operating region, located in front of the operating console (26), in such a way that it is readable by a machine operator, and a protected position in which the display surface (76a, 76b) is located opposite a counterpart surface (82) of the console body (52).

8. The earth working machine (10) according to Claim 7,
**characterized in that** the display apparatus (76) is fastenable in the protected position, against a movement out of the protected position toward the operating position, by way of a fastening apparatus (90), the fastening apparatus (90) preferably being received entirely in the console body (52).

9. The earth working machine (10) according to Claim 8,
**characterized in that** the fastening apparatus (90) is displaceable, by means of a part (70) of the console body (52) which is movable relative to an operator's platform-mounted part (53) of the console body (52), in particular by means of the cover (70) of Claim 3, between a fastened position in which the fastening apparatus (90) fastens the display apparatus (76) in the protected position, and a release position in which the display apparatus (76) is movable out of the protected position into the operating position.

10. The earth working machine (10) according to one of Claims 7 to 9,
**characterized in that** in the operating position the display apparatus (76) is mounted positionally modifiably relative to the console body (52), in particular positionally modifiably fashion along the pitch axis (Ni) of the earth working machine (10).

11. The earth working machine (10) according to one of the preceding claims,
**characterized in that** the operating console (26) comprises an additional operating panel (74) that is provided on the console body (52) immovably relative thereto, the additional operating panel (74) being coverable with a covering (76) when not in use.

12. The earth working machine (10) according to Claim 11, incorporating at least one of Claims 7 to 10,
**characterized in that** the covering (76) of the additional operating panel (74) encompasses or is the display apparatus (76); and the counterpart surface (82) encompasses or is the additional operating panel (74).

13. The earth working machine (10) according to Claim 12, incorporating at least Claim 10,
**characterized in that** the display apparatus (76) comprises a securing configuration (84) that, in interaction with a counterpart securing configuration (86) of the console body (52), permits a movement into the protected position only when the display apparatus (76) is in a predetermined position relative to the console body (52) in which the display apparatus (76) is conveyable into juxtaposition with the additional operating panel (74).

14. The earth working machine (10) according to Claim 13,
**characterized in that** the securing configuration (84) comprises a positive engagement configuration (88) for positive fastening engagement with an engagement portion (90b) of the fastening apparatus (90).

## Revendications

1. Machine de traitement du sol (10), telle qu'une fraiseuse de route (10), une recycleuse, un stabilisateur ou un mineur de surface, comprenant un châssis (22) et un cadre de machine (12) supporté par le châssis (22), dans lequel la machine de traitement du sol (10) comprend un dispositif de travail (32) pour le traitement du sol et dans lequel un poste de conduite (24) avec un pupitre de commande (26) pour la commande d'au moins un dispositif fonctionnel (32, 39) de la machine de traitement du sol (10) est prévu sur le cadre de machine (12), dans lequel le pupitre de commande (26) comprend un corps de pupitre (52) et un panneau de commande (54, 66) mobile par rapport au corps de pupitre (52, 66) avec au moins un élément de commande (58) associé ou pouvant être associé à un dispositif fonctionnel (32, 39) pour sa commande, dans lequel le panneau de commande (54, 66) peut être déplacé entre une position de rangement et une position de commande, dans lequel ledit au moins un élément de commande (58) est recouvert, en position de rangement, par une partie (56a, 72a) du corps de pupitre (52) et dans lequel au moins un élément de commande (58) est dégagé, en position de commande, et donc accessible pour sa commande par un opérateur de machine,
**caractérisé en ce que** le panneau de commande (54, 66) est déplaçable en translation entre la position de commande et la position de rangement.

2. Machine de traitement du sol (10) selon la revendication 1,
**caractérisée en ce que** le corps de pupitre (52) comprend une ouverture de rangement (64, 65) à travers laquelle le panneau de commande (54, 66) peut être déplacé dans la position de rangement de telle sorte que le panneau de commande (54, 66) est entièrement reçu dans le corps de pupitre (52) dans sa position de rangement.

3. Machine de traitement du sol (10) selon la revendication 1 ou 2,
**caractérisée en ce que** le corps de pupitre (52) comprend un couvercle (68, 70) mobile entre une position d'ouverture et une position de verrouillage, qui dans sa position de verrouillage ferme l'ouverture de rangement (64, 65) et sécurise ainsi le panneau de commande (54, 66) déplacé dans la position de rangement contre un déplacement hors de la position de rangement, et qui dans sa position d'ouverture libère l'ouverture de rangement (64, 65) pour un mouvement du panneau de commande (54, 66).

4. Machine de traitement du sol (10) selon l'une des revendications précédentes, **caractérisé en ce que** le pupitre de commande (26) comprend un dispositif de chauffage par convection (92) adapté pour diriger de l'air de chauffage ayant une température plus élevée que la température de l'air ambiant vers le panneau de commande (54, 66) déplacé dans la position de commande.

5. Machine de traitement du sol (10) selon la revendication 4, y compris la revendication 2,
**caractérisée en ce que** le dispositif de chauffage par convection (92) évacue l'air de chauffage d'une zone de rangement (56, 72) du pupitre de commande (26) recevant le panneau de commande (54, 66) dans sa position de rangement, à travers l'ouverture de rangement (64, 65), vers le panneau de commande (54, 66) déplacé dans la position de commande.

6. Machine de traitement du sol (10) selon l'une des revendications précédentes, **caractérisée en ce que** le pupitre de commande (26) comprend deux panneaux de commande (54, 66), dans laquelle le pupitre de commande (26) est conçu selon l'une des revendications précédentes en ce qui concerne chacun des deux panneaux de commande (54, 66).

7. Machine de traitement du sol (10) selon l'une des revendications précédentes, **caractérisée en ce que** le pupitre de commande (26) comprend un dispositif d'affichage (76) qui est mobile par rapport au corps de pupitre (52) entre une position d'opération dans laquelle une surface d'affichage (76a, 76b) du dispositif d'affichage (76) est orientée vers une zone de commande située devant le pupitre de commande (26) de manière à pouvoir être lue par un opérateur de machine, et une position de protection dans laquelle la surface d'affichage (76a, 76b) est opposée à une contre-surface (82) du corps du pupitre (52).

8. Machine de traitement du sol (10) selon la revendication 7,
**caractérisée en ce que** le dispositif d'affichage (76) peut être fixé dans la position de protection par un dispositif de fixation (90) contre tout déplacement hors de la position de protection en direction de la position d'opération, le dispositif de fixation (90) étant de préférence entièrement logé dans le corps de pupitre (52).

9. Machine de traitement du sol (10) selon la revendication 8,
**caractérisée en ce que** le dispositif de fixation (90) est réglable par une partie (70) du corps de pupitre (52) qui est mobile par rapport à une partie (53) du corps de pupitre (52) fixé au poste de conduite, en particulier par le couvercle (70) de la revendication 3, entre une position de fixation, dans laquelle le dispositif de fixation (90) fixe le dispositif d'affichage (76) dans la position de protection, et une position de libération, dans laquelle le dispositif d'affichage (76) peut être déplacé de la position de protection à la position d'opération.

10. Machine de traitement du sol (10) selon une des revendications 7 à 9,
**caractérisée en ce que** le dispositif d'affichage (76) est monté en position d'opération de manière à être mobile par rapport au corps de pupitre (52), en particulier de manière à être mobile le long de l'axe de tangage (Ni) de la machine de traitement du sol (10).

11. Machine de traitement du sol (10) selon l'une des revendications précédentes, **caractérisée en ce que** le pupitre de commande (26) comporte un panneau de commande supplémentaire (74) qui est prévu sur le corps du pupitre (52) de manière à être immobile par rapport à ce dernier, le panneau de commande supplémentaire (74) pouvant être recouvert par un recouvrement (76) lorsqu'il n'est pas utilisé.

12. Machine de traitement du sol (10) selon la revendication 11, y compris au moins une des revendications 7 à 10,
**caractérisée en ce que** le recouvrement (76) du panneau de commande supplémentaire (74) comprend ou est muni du dispositif d'affichage (76) et **en ce que** la contre-surface (82) comprend ou est munie du panneau de commande supplémentaire (74).

13. Machine de traitement du sol (10) selon la revendication 12, comprenant au moins la revendication 10,
**caractérisée en ce que** le dispositif d'affichage (76) comprend une formation de sécurisation (84) qui, en coopération avec une contre-formation de sécurisation (86) du corps de pupitre (52), ne permet un mouvement dans la position de protection que lorsque le dispositif d'affichage (76) est situé par rapport au corps de pupitre (52) dans une position prédéterminée dans laquelle le dispositif d'affichage (76) peut être amené en opposition au panneau de commande supplémentaire (74).

14. Machine de traitement du sol (10) selon la revendication 13,
**caractérisée en ce que** la formation de sécurisation (84) comprend une formation d'engagement positif (88) pour un engagement de verrouillage positif avec une partie d'engagement (90b) du dispositif de fixation (90).
